# EUROPEAN PATENT APPLICATION

(11) **EP 4 529 185 A1**
(43) Date of publication of application: **26.03.2025**
(21) Application number: 23199537.4
(22) Date of filing: 25.09.2023
(51) Int. Cl.: H04N 21/414

(54) **AUTOMOTIVE INFOTAINMENT VIDEO PLAYER SYSTEM**

(71) Applicant: Screens GmbH, 70329 Stuttgart (DE)
(72) Inventor: Schuster, Simon, 70329 Stuttgart (DE); Beer, Dirk, 70329 Stuttgart (DE)
(74) Representative: Laqua, Bernd Christian Kurt

(57) **Abstract**

An automotive infotainment video player system comprises a video server configured to store at least one video, the video being linked to at least one marking mask (M), which includes at least one user-interactable display segment (5), a display arrangement (20) configured to display the video linked to the at least one marking mask (M), an input device configured to receive a user input, which includes a user's interaction with the user-interactable display segment (5) of the marking mask (M) that is linked to the video which is displayed by the display arrangement (20), and a processing unit configured to operate the display arrangement (20) in response to the user input, which is received by the input device.

## Description

The present disclosure generally relates to the field of video player systems for displaying and analyzing automotive infotainment applications.

More particularly, the present disclosure relates to a video database and a video player for analyzing automotive infotainment systems, the video player being capable for in-video navigation and integrated translation.

Automobile manufacturers and suppliers around the world are facing the challenge of obtaining a well-founded market overview of the innovations of competitors in the development of so-called automotive infotainment systems, which include e.g. displays and controls in a vehicle, in order to be commercially successful with their own vehicles. Possible sources of information are primarily limited to the competitors' websites, online video databases, trade fairs and, of course, the competitor vehicles themselves. When analyzing competitor vehicles, manufacturers and suppliers have to apply enormous efforts to record as many user interactions as possible in photos or videos to communicate the discovered innovations to their analysts. In some cases, smaller features of the infotainment systems are even reproduced in the form of so called "click dummies". Despite these efforts, there is a permanent lack of information, as the costs of a complete documentation of an infotainment system is normally too high for individual providers or manufacturers and, moreover, only a fraction of the relevant foreign competitor vehicles can be analyzed at all.

To address the lack of information regarding automotive infotainment systems, Screens GmbH has been operating an online video database called ScreensStudio since February 2019, which is used by car manufacturers and suppliers worldwide. The database provides its users with comprehensive video documentation of around 30 to 40 new vehicles each year, in which test drivers perform almost every possible interaction with the vehicles' infotainment systems.

The recordings or video documentations are available on online video databases and document an automotive infotainment system's reaction to a user's or driver's input or interaction. The recordings may capture up to ten perspectives simultaneously to document all displays and controls in a vehicle reacting to a user's interaction with an automotive infotainment system. Further, the recordings may capture a vehicle's surrounding environment for documenting effects of the user's interaction with an automotive infotainment system.

However, depending on a user's interaction, different displays of a documented automotive infotainment system may change their content at the same time so that a user watching individual videos may not understand the interaction of the different displays with each other, may not recognize any latency times or may not relate the information and notifications in the vehicle displays to a current traffic situation.

Since a complete documentation of an infotainment system requires several hours of videos to be captured from multiple perspectives, it is very difficult to find the scenes that belong together - even with multiple video players, it is impossible to play them synchronously. Furthermore, when displaying a concrete user interaction, the user does not know in which of the other captured displays the content might also change in response to the current user interaction, which is why even a selection of a possibly relevant second or third camera perspective cannot be made in a targeted manner. A montage of all perspectives into one video would reduce the size of the individual video so much that the image content would no longer be well recognizable. Comparison across several vehicles is hardly possible with individual videos of this length.

Moreover, some automotive infotainment systems of vehicles from foreign car manufacturers may not be changed to English or other languages, as they are only sold on the respective domestic market, which further increases efforts and costs for foreign competitor vehicle analysis.

It is thus an object of the present disclosure to provide an improved automotive infotainment video player system, the improved system enhancing displaying recordings captured from a vehicle's infotainment system.

A solution is defined by the independent claims. Further embodiments are recited in the dependent claims.

According to a first aspect, an automotive infotainment video player system comprises a video server configured to store a plurality of different videos, a display arrangement configured to display at least two different videos simultaneously, an input device configured to receive a user input for selecting one of the videos stored on the video server to be displayed and a processing unit configured to operate the display arrangement to receive, in response to a user's input for selecting one of the videos stored on the video server to be displayed, at least two different videos from the video server and display the received videos simultaneously.

The video server can be a local or remote server connected to the display arrangement and/or the processing unit. The video server may include one or more non-transient storage devices configured to store digital video data of the plurality of the different videos. Optionally, the video server can be connected with the display arrangement and/or the processing unit via an Internet or other network connection.

The display arrangement may include one or more screens configured to display and/or playback the videos stored on the server. Optionally, the display arrangement may include a data storage and/or a display processor configured for storing or buffering video data. The display arrangement may be configured for receiving, parsing and/or decoding video data and/or a video data stream received from the video server.

The input device may include any device allowing a user to interact with the video player system and/or allowing a user to input commands or data into the video player system. For instance, the video player system may include a computer mouse, a keyboard or a touchscreen.

The processing unit can be integrated into the video server or the display arrangement. The processing unit may include at least one integrated circuit processor and/or a processor storage (or "memory") configured for storing or buffering video data. The processing unit may be configured for receiving, parsing and/or decoding video data or a video data stream received from the video server.

Further, the processing unit can be configured to operate the display arrangement to start displaying the at least two different videos simultaneously.

An advantage of the infotainment video player system is that videos showing the different perspectives can be displayed or played synchronously. Videos showing different perspectives or aspects of an automotive infotainment system can be displayed simultaneously and can be started and stopped together or synchronously based on a single user input or user interaction. Further, each of the different perspectives can be replaced by one of the other perspectives during playback of the video.

Thus, a user of the video player system can recognize an effect of a user's interaction with the automotive infotainment system on different elements of the automotive infotainment system and/or on different parts of the vehicle. In other words, the different videos to be displayed by the display arrangement can be videos, which show different aspects or impacts of a user's or driver's interaction with an automotive infotainment system that is documented with the different videos.

For example, the display arrangement of the video player system may display or playback three videos simultaneously: a first video showing a user's interaction with a touch screen for operating the vehicle's headlights, a second video showing, from an outside perspective, the vehicle's headlights being activated in response to the user's interaction, and a third video showing the activation of a respective headlight indication symbol in a general control screen or panel of the vehicle.

Since, in a vehicle, normally only one interactive display or control element is operated by the user or driver at a time and the other displays only show corresponding reactions, the display arrangement or screen of the video player system can, for instance, be divided into a first or main video area (main player) and two smaller secondary video areas (feature players). The operated display can be automatically shown in the main player. Furthermore, during playback, the user may move a video from the main player to the feature players, for example via a drag-and-drop interaction, so that the displayed videos swap positions on the display arrangement or screen.

In addition, standard use cases of different vehicles can be displayed side by side in the video player and played synchronously. Displaying use cases of different vehicles may serve for comparing different automotive infotainment systems of the vehicles.

The video data of the videos stored on the video server may include information indicating which video or video section is related to another video or to a section of another video. In one embodiment, the video data of each video includes information, which indicates which videos and video sections are related to different video sections of the video.

Alternatively or additionally, information indicating which video or video section is related to another video or a section of another video can be stored by at least one of the processing unit, the video server or the display arrangement. When the user selects one video to be displayed by the display arrangement, a decision which at least two videos from the video server are to be displayed simultaneously can be made based on the information indicating which video or video section is related to another video or a section of another video. The decision which the at least two videos from the server are to be displayed simultaneously can be made by at least one of the processing unit, the video server or the display arrangement. The at least two displayed videos may include the video selected by the user and at least one video related to the selected video.

The display arrangement can be further configured to display at least one selection element, wherein the user input for selecting one of videos stored on the video server can be based on a user's interaction with the displayed selection element.

The selection element can be a video tree, which indicates a relationship between the different videos stored on the video server.

For example, when the user starts interacting with the automotive infotainment video player system, a data structure can be visually displayed in the form of the selection element or video tree, for example by means of the display arrangement. If the user selects an interaction or video from the video tree or selection element to be played, a respective information can be forwarded to the video server, for example by the processing unit or input device.

The input device can be further configured to receive a user input for setting or defining a combination of at least two different videos stored on the video server, which is to be displayed by the display arrangement in response to selecting one of the videos stored.

In response to a user's input, for example in response to selecting an interaction or video from the video tree or selection element to be played, the processing unit may signal the display arrangement that a set or combination of different videos is to be played, for example a set or combination of at least two different videos related or linked with the selected interaction or video. Further, the processing unit may operate the display arrangement to display a plurality of video players, each player being configured to show or display at least one of the at least two different videos related to or linked with the selected interaction or video.

In response to signaling that an interaction or video is to be played, the display arrangement may signal the video server to transmit a set or combination of at least two videos to be played, for instance a set or combination of at least two different videos related to or linked with the selected interaction or video.

Optionally, the processing unit can be configured to operate the display arrangement to start displaying the at least two different videos after receiving the at least two different videos from the video server has been completed or after a predetermined amount of video data for each of the at least two different videos has been received from the video server.

In other words, a global playback, i.e., a parallel playback, of the at least two different videos from the video server can be started when enough video data for simultaneously displaying or showing the at least two different videos has been received and/or buffered by the display arrangement. The video data, which has to be received and/or buffered by the display arrangement may include audio and subtitle tracks.

Optionally, the display arrangement can be configured to simultaneously display the at least two different videos and an accompanying text information. The accompanying text information can be generated based on video data of at least one of the two different videos.

The accompanying text information can be generated based on text information, which is visible in at least one of the two different videos when displayed.

For instance, the accompanying text information may represent a translation of text, which is visible in at least one of the two different videos when displayed, into another language (different from an original language shown in the videos).

A video to be displayed by the display arrangement can, for example by means of a processor of the display arrangement or by means of the processing unit, be converted into individual video frames or images, which are then processed for optical character recognition (OCR) by an OCR engine or program that is operated by means of a processor of the display arrangement or by means of the processing unit.

The OCR engine or program may be configured to recognize predefined patterns, for instance predefined character patterns, in the individual video frames or images and store its positions, i.e., a position of the detected patterns in the video frames or images, temporarily in a memory of the display arrangement or the processing unit.

Further, the OCR engine or program can be configured to determine whether a pattern, which has been recognized in an analyzed individual frame or image, can also be identified in a predetermined number of frames or images, which succeed the analyzed individual frame or image.

For instance, the OCR engine or program can be configured to determine whether a pattern, which has been detected in an analyzed frame or image, can be detected in a predetermined number of 30 to 60 frames or images that are consecutive or neighboring to the analyzed frame or image, too. For instance, it can be determined whether a pattern can be detected at least 30 times within 60 frames or images.

In case the pattern has been recognized in the predetermined number of consecutive or neighboring frames or images, the OCR engine or program may re-evaluate the predetermined number of neighboring or consecutive frames or images for determining whether the pattern can be recognized in the individual frames or images. For re-evaluation whether the pattern can be identified in the individual frames or images, the OCR engine or program may include at least one of considering patterns recognized at different positions in the frames or images, considering a direction of movement of the video focus ("optical flow"), using a Kalman Filter for eliminating a video background around a pattern and using an artificial intelligence (AI) based pattern recognition method, for example.

Based on the number of consecutive frames or images for which the OCR engine or program can recognize a pattern, in particular based on the number of consecutive frames or images for which the OCR engine or program can recognize a pattern when re-evaluating the predefined numbers of frames or images, the OCR engine or program can decide whether a recognized pattern is to be considered as acknowledged.

It is thus possible to determine with a high degree of reliability whether one or more characters are shown in the video, even if a pattern has not been recognized or has been incorrectly recognized by the OCR engine or program in a number of frames or images.

Based on recognized patterns that are considered as acknowledged, the OCR engine or program can generate a text information, which can be displayed by means of the display arrangement when displaying the video or video frames based on which the one or more characters have been determined or identified.

Further, the OCR engine or program can be configured to translate the generated text information by means of a translation method, for instance based on an AI based translation method. The translated text information can be displayed by means of the display arrangement when displaying the video based on which the one or more characters have been determined or identified.

The videos stored on the video server can be linked to at least one marking mask. Each marking mask can include at least one user-interactable display segment. The videos, which are displayed or shown by the display arrangement, can be overplayed by marking masks linked to the respective videos so that a user can interact with the user-interactable display segments of the marking masks when the videos are displayed. In other words, the display arrangement can be configured to overlay the displayed videos with the marking masks linked to the displayed videos so that segments of the display arrangement form user-interactable display sections or segments. The input device can be configured to receive a user input including a user's interaction with a user-interactable display segment of one of the marking masks linked to one of the videos which are displayed by the display arrangement.

The display arrangement can be further configured to display the user-interactable display segments when displaying the at least two different videos. However, in some embodiments, the user-interactable display segments may not be visible when the videos are displayed by the display arrangement.

The marking masks can be generated based on video data of the videos stored on the video server. Optionally, the marking masks and/or the user interactable segments can be generated by means of a computer implemented method, for instance by means of an AI based computer implemented method.

The at least one user-interactable display segment can be formed and/or located corresponding to an object visible in one of the videos when displayed.

For example, the at least one user-interactable display segment may be formed and/or located corresponding to a control element or button of an automotive infotainment system shown in the video when displayed. For instance, the at least one user-interactable display segment may be formed and/or located corresponding to a menu item of a touch display of an automotive infotainment system shown in the video when displayed.

At least one of the shape of the at least one user-interactable display segment and the position of the at least one user-interactable display segment can be variable over the video's playtime. For instance, the shape and/or the position of the at least one user-interactable display segment of the marking mask may change over time corresponding to a shape and/or position of an object visible in one of the videos when displayed.

The processing unit can be configured to operate the display arrangement in response to a user's input to perform at least one of stop displaying the at least two different videos, continue displaying the at least two different videos, adjust a volume of a sound output, adjust a playback speed of the different videos, synchronously forward the at least two different videos, and synchronously rewind the at least two different videos. Further, the processing unit can be configured to operate the display arrangement, in response to the user input received by the input device, to forward or navigate the videos to another section of the videos or to change the displayed videos.

For example, the at least one user-interactable display segment can be linked to a predefined section of a video stored on the video server. In particular, a user-interactable object formed and located corresponding to a menu item of a touch display shown in the video when displayed can be linked to a video or video section showing a control menu or sub-menu which corresponds to the control menu or submenu that would be activated in response to a user's or driver's interaction with the shown menu item of the touch display shown in the video.

When a user interacts with a user-interactable display segment via the input device, for instance via activating or clicking a computer mouse at a location of the user-interactable display segment, the videos displayed by the display arrangement can be synchronously forwarded or navigated to video sections linked to the user-interactable display segment. Alternatively, in case the user-interactable display segment is linked to another video stored on the video server, the processing unit may signal the display arrangement that a set or combination of different videos is to be played, for instance a set or combination of at least two different videos linked to the user-interactable display segment.

An advantage of linking the videos to a marking mask and/or to user-interactable display segments is an enhanced usability and immersive user experience when navigating through the videos stored on the video server. The user may navigate through the videos or video sections following a sequence of interactions corresponding to user-interactions made possible by the automotive infotainment system shown in the videos stored on the video server. The user can thus concentrate on the videos shown by the display arrangement without having to search in a navigation tree for the next desired interaction. Instead, the user may interact directly with items or control elements shown in the displayed videos to navigate to other videos or video sequences showing the reaction of the documented automotive infotainment system.

A method performed by an automotive infotainment video player system comprises the steps:
- storing, on a video server, a plurality of different videos;
- receiving, by an input device, a user input for selecting one of the videos stored on the video server to be displayed; and
- in response to receiving the user input for selecting one of the videos stored on the video server to be displayed, displaying, using a display arrangement, at least two different videos simultaneously.

A computer program product comprises program code portions for performing the method when the computer program product is executed on one or more computing devices. The computer program product may be stored on a computer readable recording medium.

According to a second aspect, an automotive infotainment video player system comprises a video server configured to store at least one video, the video being linked to at least one marking mask, which includes at least one user-interactable display segment; a display arrangement configured to display the video linked to the at least one marking mask; an input device configured to receive a user input, which includes a user's interaction with the user-interactable display segment of the marking mask that is linked to the video which is displayed by the display arrangement; and a processing unit configured to operate the display arrangement in response to the user input, which is received by the input device.

The video server can be a local or remote server connected to the display arrangement and/or the processing unit. The video server may include one or more non-transient storage devices configured to store digital video data of the plurality of the different videos. Optionally, the video server can be connected with the display arrangement and/or the processing unit via an Internet or other network connection.

The display arrangement may include one or more screens configured to display and/or playback the videos stored on the server. Optionally, the display arrangement may include a data storage and/or a display processor configured for storing or buffering video data. The display arrangement may be configured for receiving, parsing and/or decoding video data and/or a video data stream received from the video server.

The input device may include any device allowing a user to interact with the video player system and/or allowing user to input commands or data into the video player system. For instance, the video player system may include a computer mouse, a keyboard or a touchscreen.

The processing unit can be integrated into the video server or the display arrangement. The processing unit may include at least one integrated circuit processor and/or a processor storage (or "memory") configured for storing or buffering video data. The (e.g., display) integrated circuit processor may be configured for receiving, parsing and/or decoding video data or a video data stream received from the video server.

The video, which is displayed or shown by the display arrangement, can be overplayed by the marking mask linked to the video so that a user can interact with the user-interactable display segment of the marking mask when the video is displayed. In other words, the display arrangement can be configured to overlay the displayed video with the marking mask linked to the displayed video so that segments of the display arrangement form user-interactable display sections or segments. The input device can be configured to receive a user input including a user's interaction with a user-interactable display segment of the marking mask linked to the video which is displayed by the display arrangement.

The display arrangement can be further configured to display the at least one user-interactable display segment when displaying the at least two different videos. However, in some embodiments, the user-interactable display segment may not be visible when the video is displayed by the display arrangement.

The marking mask can be generated based on video data of the video, which is stored on the video server and displayed by the display arrangement. Optionally, the marking mask and/or the at least one user interactable segment can be generated by means of a computer implemented method, for instance by means of an AI based computer implemented method.

The at least one user-interactable display segment can be formed and/or located corresponding to an object visible in one of the videos when displayed.

For example, the at least one user-interactable display segment may be formed and/or located corresponding to a control element or button of an automotive infotainment system shown in the video when displayed. For instance, the at least one user-interactable display segment may be formed and/or located corresponding to a menu item of a touch display of an automotive infotainment system shown in the video when displayed.

At least one of the shape of the at least one user-interactable display segment and the position of the at least one user-interactable display segment can be variable over the video's playtime. For instance, the shape and/or the position of the at least one user-interactable display segment of the marking mask may change over time corresponding to a shape and/or position of an object visible in one of the videos when displayed.

The processing unit can be further configured to operate the display arrangement, in response to the user input received by the input device, to perform at least one of start displaying the video, stop displaying the video, continue displaying the video, adjust a volume of a sound output, adjust a playback speed of the displayed video, forward the displayed video, and rewind the displayed video. Further, the processing unit can be configured to operate the display arrangement, in response to the user input received by the input device, to forward or navigate the video to another section of the video or change the displayed video.

When a user interacts with a user-interactable display segment via the input device, for instance via activating or clicking a computer mouse at a location of the user-interactable display segment, the video displayed by the display arrangement can be synchronously forwarded or navigated to a video section linked to the user-interactable display segment. Alternatively, in case the user-interactable display segment is linked to another video stored on the video server, the processing unit may signal the display arrangement that a different video is to be played, for instance a video linked to the user-interactable display segment.

An advantage of linking the videos to a marking mask and/or to user-interactable display segments is an enhanced usability and immersive user experience when navigating through the videos stored on the video server. The user may navigate through the videos or video sections following a sequence of interactions corresponding to user-interactions made possible by the automotive infotainment system shown in the videos stored on the video server. The user can thus concentrate on the video shown by the display arrangement without having to search in a navigation tree for the next desired interaction. Instead, the user may interact directly with items or control elements shown in the displayed video to navigate to other videos or video sequences showing the reaction of the documented automotive infotainment system.

The display arrangement can be further configured to simultaneously display video and an accompanying text information. The accompanying text information can be generated based on video data of the least one video. In other words, the different videos to be displayed by the display arrangement can be videos which show different aspects or impacts of a user's or driver's interaction with an automotive infotainment system that is documented with the different videos.

The accompanying text information can be generated based on text information visible in the video when displayed.

Optionally, the accompanying text information can represent a translation of text, which visible in the video when displayed, into another language (different from an original language shown in the video).

A video to be displayed by the display arrangement can, for example by means of a processor of the display arrangement or by means of the processing unit, be converted into individual video frames or images, which are then processed for optical character recognition (OCR) by an OCR engine or program that is operated by means of a processor of the display arrangement or by means of the processing unit.

The OCR engine or program may be configured to recognize predefined patterns, for instance predefined character patterns, in the individual video frames or images and store its positions, i.e., a position of the detected patterns in the video frames or images, temporarily in a memory of the display arrangement or the processing unit.

Further, the OCR engine or program can be configured to determine whether a pattern, which has been recognized in an analyzed individual frame or image, can also be identified in a predetermined number of frames or images, which succeed the analyzed individual frame or image.

For instance, the OCR engine or program can be configured to determine whether a pattern, which has been detected in an analyzed frame or image, can be detected in a predetermined number of 30 to 60 frames or images that are consecutive or neighboring to the analyzed frame or image, too. For instance, it can be determined whether a pattern can be detected at least 30 times within 60 frames or images.

In case the pattern has been recognized in the predetermined number of consecutive or neighboring frames or images, the OCR engine or program may re-evaluate the predetermined number of neighboring or consecutive frames or images for determining whether the pattern can be recognized in the individual frames or images. For re-evaluation whether the pattern can be identified in the individual frames or images, the OCR engine or program may include at least one of considering patterns recognized at different positions in the frames or images, considering a direction of movement of the video focus ("optical flow"), using a Kalman Filter for eliminating a video background of a pattern and using an artificial intelligence (AI) based pattern recognition method, for example.

Based on the number of consecutive frames or images for which the OCR engine or program can recognize a pattern, in particular based on the number of consecutive frames or images for which the OCR engine or program can recognize a pattern when re-evaluating the predefined numbers of frames or images, the OCR engine or program can decide whether a recognized pattern is to be considered as acknowledged.

It is thus possible to determine with a high degree of reliability whether one or more characters are shown in the video, even if a pattern was not recognized or was incorrectly recognized by the OCR engine or program in a number of frames or images.

Based on recognized patterns that are considered as acknowledged, the OCR engine or program can generate a text information, which can be displayed by means of the display arrangement when displaying the video or video frames based on which the one or more characters have been determined or identified.

Further, the OCR engine or program can be configured to translate the generated text information by means of a translation method, for instance based on an AI based translation method. The translated text information can be displayed by means of the display arrangement when displaying the video based on which the one or more characters have been determined or identified.

The video server can be configured to store a plurality of different videos. The display arrangement can be configured to display at least two of the different videos simultaneously.

Each of the plurality of different videos can be linked to at least one marking mask which includes at least one user-interactable display segment.

Optionally, the processing unit can be configured to operate the display arrangement to start displaying the at least two different videos simultaneously.

The processing unit can be configured to operate the display arrangement to start displaying the at least two different videos after receiving of the at least two different videos from the video server has been completed or after a predetermined amount of video data for each of the at least two different videos has been received from the video server.

An advantage of displaying two different videos simultaneously is that videos showing the different perspectives can be displayed or played synchronously. Videos showing different perspectives or aspects of an automotive infotainment system can be displayed simultaneously and can be started and stopped together or synchronously based on a single user input or user interaction. Further, each of the different perspectives can be replaced by one of the other perspectives during playback of the video.

Thus, a user of the video player system can recognize an effect of a user's interaction with the automotive infotainment system on different elements of the automotive infotainment system and/or on different parts of the vehicle.

Since, in a vehicle, normally only one interactive display or control element is operated by the user or driver at a time and the other displays only show corresponding reactions, the display arrangement or screen of video player system can, for instance, be divided into a first or main video area (main player) and two smaller secondary video areas (feature players). The operated display can be automatically shown in the main player. Furthermore, during playback, the user may move a video from the main player to the feature players, for example via a drag-and-drop interaction, so that the displayed videos swap positions on the display arrangement or screen.

The video data of the videos stored on the video server may include information indicating which video or video section is related to another video or to a section of another video. In one embodiment, the video data of each video includes information, which indicates which videos and video sections are related to different video sections of the video.

Alternatively or additionally, information indicating which video or video section is related to another video or a section of another video can be stored by at least one of the processing unit, the video server or the display arrangement. When the user selects one video to be displayed by the display arrangement, a decision which at least two videos from the video server are to be displayed simultaneously can be made based on the information indicating which video or video section is related to another video or a section of another video. The decision which the at least two videos from the server are to be displayed simultaneously can be made by at least one of the processing unit, the video server or the display arrangement. The at least two displayed videos may include the video selected by the user and at least one video related to the selected video.

The display arrangement can be further configured to display at least one selection element, wherein the user input for selecting one of videos stored on the video server can be based on a user's interaction with the displayed selection element.

The selection element can be a video tree, which indicates a relationship between the different videos stored on the video server.

For example, when the user starts interacting with the automotive infotainment video player system, a data structure can be visually displayed in the form of the selection element or video tree, for example by means of the display arrangement. If the user selects an interaction or video from the video tree or selection element to be played, a respective information can be forwarded to the video server, for example by the processing unit or input device.

The input device can be further configured to receive a user input for setting or defining a combination of at least two different videos stored on the video server, which is to be displayed by the display arrangement in response to selecting one of the videos stored.

In response to a user's input, for example in response to selecting an interaction or video from the video tree or selection element to be played, the processing unit may signal the display arrangement that a set or combination of different videos is to be played, for example a set or combination of at least two different videos related or linked with the selected interaction or video. Further, the processing unit may operate the display arrangement to display a plurality of video players, each player being configured to show or display at least one of the at least two different videos related or linked with the selected interaction or video.

In response to signaling that an interaction or video is to be played, the display arrangement may signal the video server to transmit a set or combination of at least two videos to be played, for instance a set or combination of at least two different videos related or linked with the selected interaction or video.

A method performed by an automotive infotainment video player system comprises the steps:
storing, on a video server, at least one video, the video being linked to at least one marking mask, which includes at least one user-interactable display segment;
displaying, using a display arrangement, the video linked to the at least one marking mask;
inputting, by an input device, a user input including a user's interaction with the user-interactable display segment of the marking mask, which is linked to the video that is displayed by the display arrangement; and
operating, using a processing unit, the display arrangement in response to the user input, which is received by the input device.

A computer program product comprises program code portions for performing the method when the computer program product is executed on one or more computing devices. The computer program product can be stored on a computer readable recording medium.

In the following, the present disclosure will further be described with reference to exemplary implementations illustrated in the figures, in which:
- Fig. 1: schematically illustrates an exemplary embodiment of a video player system;
- Fig. 2: schematically illustrates an exemplary embodiment of a display arrangement;
- Fig. 3: illustrates a method for operating the embodiment shown in Fig. 2;
- Fig. 4: schematically illustrates an exemplary marking mask overlaying a video, which is displayed by a display arrangement; and
- Fig. 5: illustrates a method for operating the embodiment shown in Fig. 4.

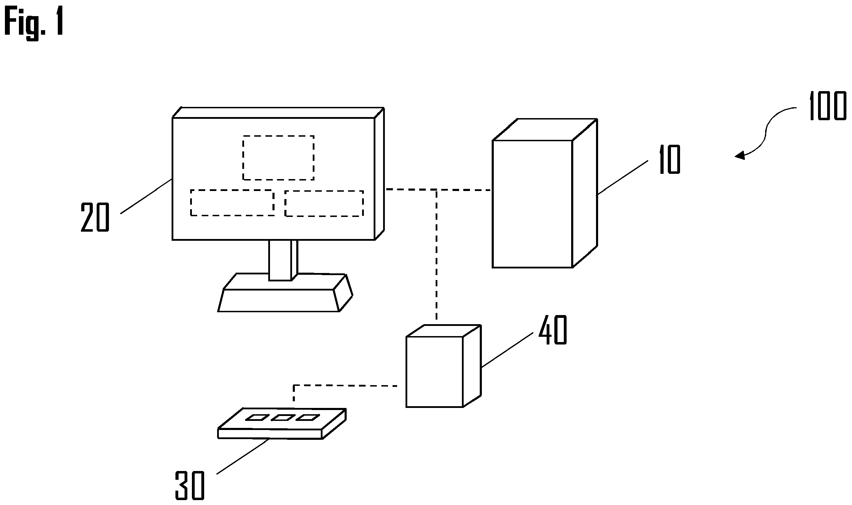

Fig. 1 schematically illustrates an exemplary embodiment of a video player system 100. The video player system 100 includes a video server 10, a display arrangement 20, an input device 30 and a processing unit 40.

In the shown example, the video server 10 is a local network server, which is configured to store a plurality of videos, which document an automotive infotainment system's reaction to a user's or driver's input or interaction. However, in other embodiments, the video server 10 can be a remote network server or an online server, which is configured for storing the plurality of videos.

Further, Fig. 1 shows the display arrangement 20. In the shown example, the display arrangement 20 is a computer monitor, which is configured to display a plurality of videos. However, in other embodiments, the display arrangement may include a plurality of monitors and/or other devices configured to display a video.

The video server 10 and the display arrangement 20 are connected to the processing unit 40. The processing unit 40 can be integrated into or be given by a computer or computer system. In other embodiments, the processing unit can be integrated into the display arrangement 20, into the video server 10 or into the input device 30.

Additionally, Fig. 1 shows an input device 30. In the shown example, the input device 30 is a keyboard configured to receive a user's input. However, in other examples, the system 100 may include any other type of input device which is configured for receiving a user's input, for example a computer mouse, a voice recognition device, a joystick or a touch screen. In some embodiments, the input device can be integrally formed with the display arrangement 20, for example in case the input device is formed by a touch screen.

As shown in Fig. 1, processing unit 40 is connected to the input device 30, the display arrangement 20 and the video server 10. Further, the processing unit 40 is configured for receiving information about a user's input or a user's interaction with the input device 30 and for operating the display arrangement 20 and the video server 10.

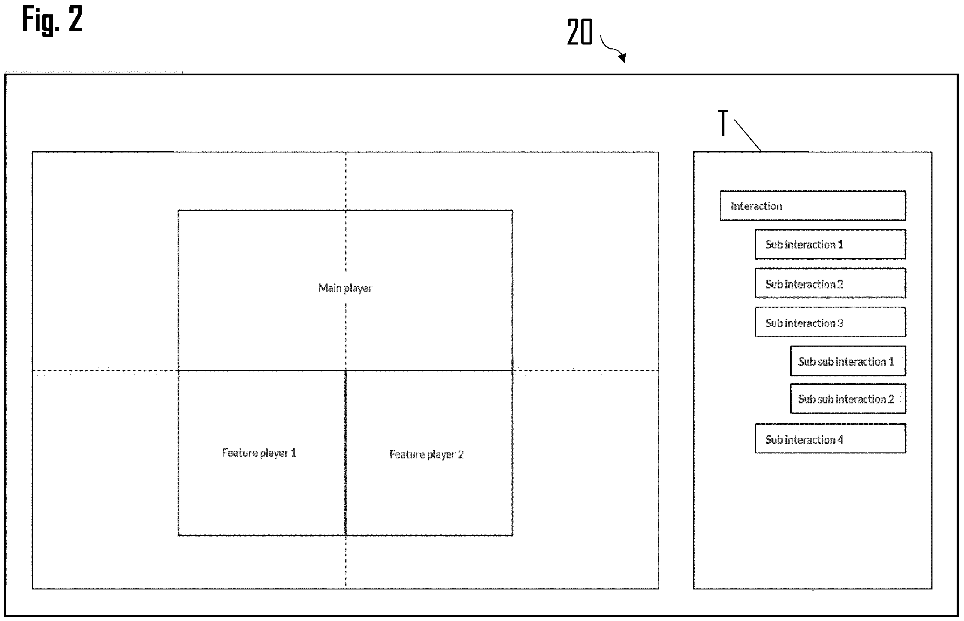

Fig. 2 shows an exemplary embodiment of a display arrangement 20, which is operated by the processing unit 40. The display arrangement 20 displays three different video players, namely a main player, a first feature player and a second feature player. Each of the three video players is configured to show or display a video, which is stored on the video server 10. In other words, the display arrangement 20, which is shown in Fig. 2, is configured to display three different videos simultaneously.

Further, the display arrangement 20 displays a video tree T that indicates which videos are stored on the video server 10 and which automotive infotainment system's reactions to a driver's or user's input or interaction are documented with the stored video.

Further, the video tree T indicates a relationship between the different videos stored on the video server. For example, the video tree T may indicate which of the different stored videos shows an aspect of the automotive infotainment system's reaction to a certain user interaction, such as an activation of an automotive navigation system, for example. Since the activation of an automotive navigation system may e.g. have an impact on a head-up display, on the information shown on a touch screen by which the navigation system is activated, and on an indication which is visible in a general control panel of a vehicle, different videos documenting the functionalities of the head-up display, the touch screen and the general control panel are related to a user's or driver's interaction with the touch screen for activating the navigation system.

In other words, the video tree T can indicate which of the stored videos are related to a certain interaction with the automotive navigation system.

When the user selects a certain interaction or video from the video tree T, the processing unit 40 operates the display arrangement 20 to receive a set of videos from the video server 10, wherein each of the received videos is related to the selected interaction or video, i.e., each of the received videos shows an aspect of the selected interaction or an effect of the interaction documented with the selected video.

The display arrangement 20 can adjust the number of players, i.e., the number of different videos to be displayed, to the number of videos received from the video server or the number of videos related with a selected interaction or video. Optionally, the display arrangement 20 may further adjust the size of the video players, i.e., the size of the displayed videos, depending on a number of videos received from the video server or the number of videos related with a selected interaction or videos.

As an alternative to automatically adjusting the number and/or size of the different video players or displayed videos, the user may select the videos to be displayed from the set of related videos. Further, the user can manually adjust a respective size of the different players or videos to be displayed and allocate the videos to be displayed to different players or sections of the display arrangement 20.

The display arrangement 20 is configured to display the set of different videos simultaneously so that the user of the video player system 100 experiences different aspects and impacts of a user's or driver's interaction with the documented automotive infotainment system simultaneously. To ensure a simultaneous playback of the different videos displayed by the display device 20, the display device starts simultaneously displaying the videos after having received the video data or at least a predetermined amount of video data from video server 10.

To further enhance the user's experience of the documented automotive infotainment system, the display arrangement 20 may be configured to display an accompanying text information when displaying the different videos. The accompanying text information may overlay the displayed videos. Alternatively, the text information can be displayed spaced apart from the different players or displayed videos.

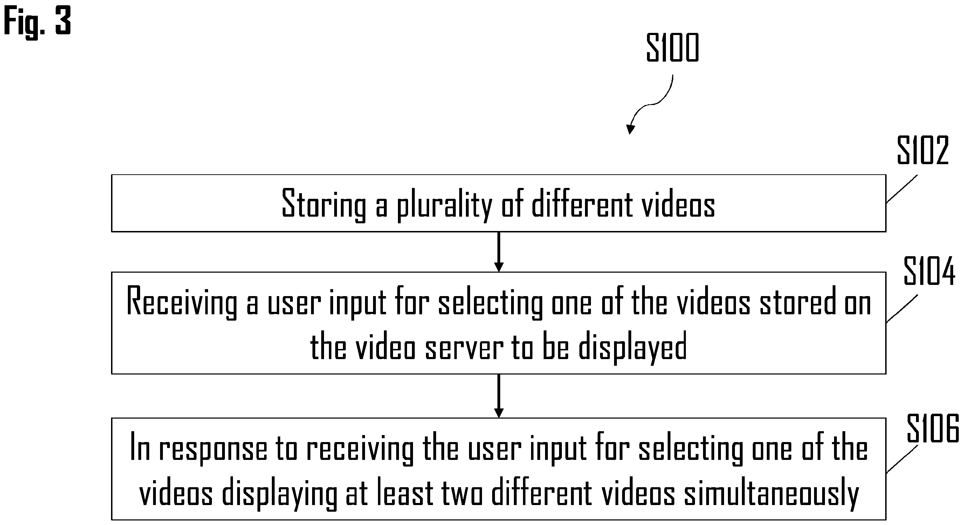

Fig. 3 illustrates a method S100 for operating the embodiment shown in Fig. 2.

In a first step S102, a plurality of videos is stored on a video server 10. In a subsequent step S104, a user's input for selecting one of the videos stored on the video server to be displayed is received. In a further step S106, at least two different videos from the video server are displayed simultaneously in response to receiving the user's input for selecting one of the videos stored on the server.

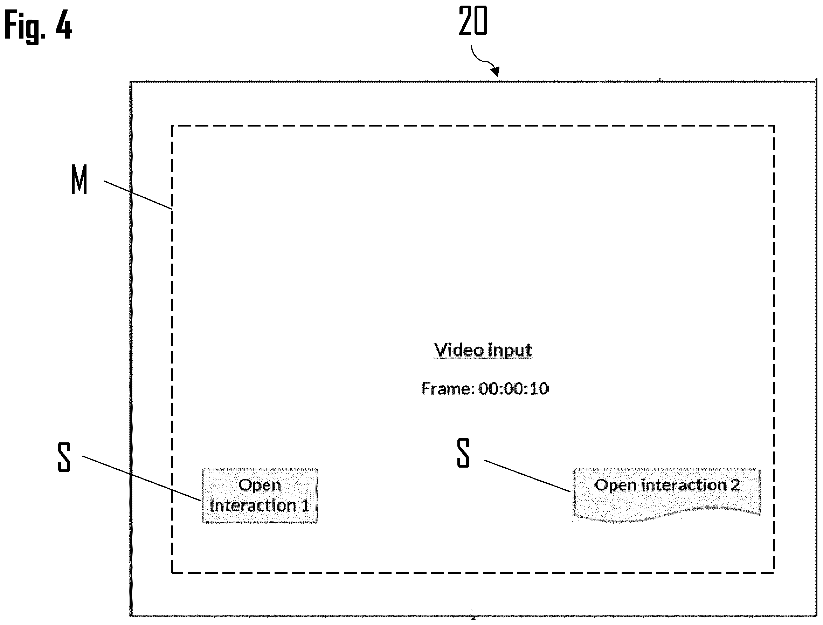

Fig. 4 shows an example for a display arrangement 20 which displays a video overplayed with a marking mask M.

The marking mask M overlays the video displayed by the display arrangement 20. Further, the marking mask M includes the user-interactable objects/segments) S. However, neither the marking mask M nor the user-interactable segments S as such are visible when the video is displayed.

The user-interactable segments S overlay operable elements of an automotive infotainment system documented by the displayed video. For example, the user-interactable segments S can overlay a (e.g., clickable) button or an icon of a touchscreen, which are shown in the displayed video. Further, the shape and the position of the user-interactable segments S are adjusted to the operable elements shown in the displayed video. Hence, although the user-interactable objects as such are not visible for a user of the video player system, the operable elements shown in the displayed video indicate which segments of the displayed video and/or the overlaying marking mask can be interacted with.

The user can interact with the user-interactable display segments S of the marking mask M via the input device 30. In case the input device 30 includes a computer mouse, the user may interact with the user-interactable display segments S by clicking at a position of the user-interactable display segment S, which is indicated by an object shown in the displayed video.

The processing unit 40 is configured to operate the display arrangement 20 in response to a user's interaction with one or more of the user-interactable display segments S. For example, the processing unit may operate the display arrangement 20 to forward or navigate the shown video to another video section or to change the displayed video, i.e., to display another video or video section stored on the video server 10.

In other words, the user-interactable display segments can be linked to predefined sections of videos stored on the video server. For instance, a user-interactable object formed and positioned corresponding to a menu item of a touch display shown in the video when displayed can be linked to a video or video section showing a control menu or sub-menu which corresponds to the control menu or submenu that would be activated in response to a driver's interaction with the shown menu item of the touch display shown in the video.

The marking mask M and the user-interactable display segments S can simplify navigating through videos documenting automotive infotainment systems. The user may navigate through the videos or video sections following a sequence of interactions corresponding to user-interactions made possible by the automotive infotainment system shown in the videos stored on the video server. The user can thus concentrate on the videos shown by the display arrangement without having to search in a navigation tree for the next desired interaction. Instead, the user may directly interact with items or control elements shown in the displayed videos to navigate to other videos or video sequences showing the reaction of the documented automotive infotainment system.

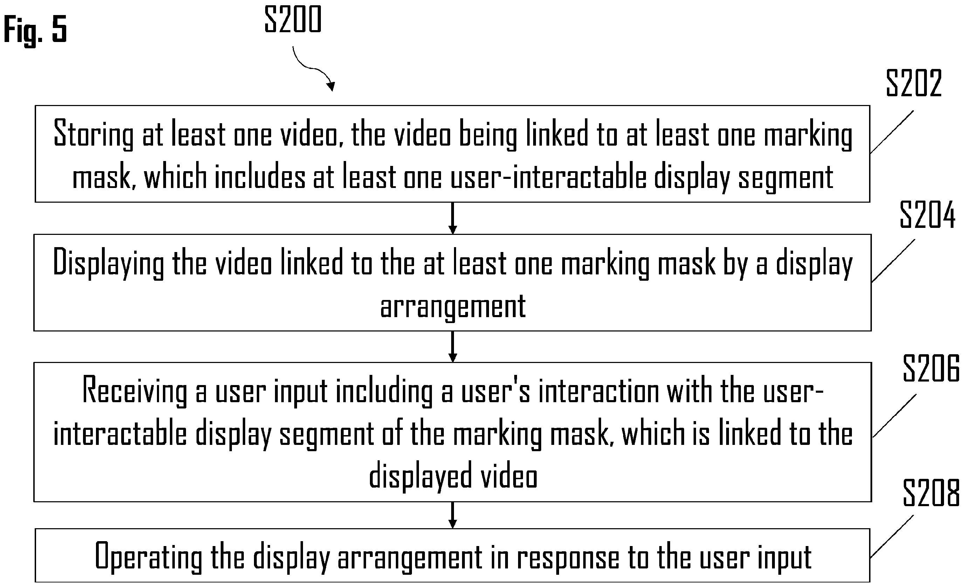

Fig. 5 illustrates a method S200 for operating the embodiment shown in Fig. 4.

In a first step S202, at least one video that is linked to at least one marking mask, which includes at least one user-interactable display segment, is stored on a video server. In a subsequent step S204, the video linked to the at least one marking mask is displayed by a display arrangement. In a further step S206, a user input including a user's interaction with the user-interactable display segment of the marking mask, which is linked to the video that is displayed, is received. In a further step 208, the display arrangement is operated in response to the user input.

In view of the above, exemplary embodiments of the present disclosure may include one or more of the following:
Embodiment A1: An automotive infotainment video player system comprising: a video server configured to store a plurality of different videos; a display arrangement configured to display at least two different videos simultaneously; an input device configured to receive a user input for selecting one of the videos stored on the video server to be displayed; and a processing unit configured to operate the display arrangement to receive, in response to a user's input for selecting one of the videos stored on the video server to be displayed, at least two different videos from the video server and display the received videos simultaneously.
Embodiment A2: The system of Embodiment A1, wherein the processing unit is configured to operate the display arrangement to perform at least one of start displaying the at least two different videos simultaneously, start displaying the at least two different videos after receiving of the at least two different videos from the video server has been completed, and start displaying the at least two different videos after a predetermined amount of video data for each of the at least two different videos has been received from the video server.
Embodiment A3: The system of Embodiment A1 or A2, wherein the display arrangement is further configured to display at least one selection element, and wherein the user input for selecting one of videos stored on the video server is based on an interaction of a user with the displayed selection element.
Embodiment A4: The system of Embodiment A3, wherein the selection element is a video tree, which indicates a relationship between the different videos stored on the video server.
Embodiment A5: The system of any of Embodiments A1 to A4, wherein the input device is further configured to receive a user input for setting a combination of at least two different videos stored on the video server, which is to displayed by the display arrangement in response to selecting one of the stored videos.
Embodiment A6: The system of any of Embodiments A1 to A5, wherein the display arrangement is further configured to simultaneously display the at least two different videos and an accompanying text information, the accompanying text information being generated based on video data of at least one of the two different videos.
Embodiment A7: The system of Embodiment A6, wherein the accompanying text information is generated based on text information visible in at least one of the two different videos when displayed.
Embodiment A8: The system of Embodiment A7, wherein the accompanying text information represents a translation of text, which is visible in at least one of the two different videos when displayed, into another language.
Embodiment A9: The system of any of Embodiments A1 to A8, wherein the videos stored on the video server are each linked to at least one marking mask, each marking mask including at least one user-interactable display segment, and wherein the input device is configured to receive a user input including a user's interaction with a user-interactable display segment of one of the marking masks linked to one of the videos which are displayed by the display arrangement.
Embodiment A10: The system of Embodiment A9, wherein the display arrangement is further configured to display the user-interactable display segments when displaying the at least two different videos.
Embodiment A11: The system of Embodiment A10, wherein the marking masks are generated based on video data of the videos stored on the video server.
Embodiment A12: The system of any of Embodiments A9 to A11, wherein at least one user-interactable display segment is formed corresponding to an object visible in one of the videos when displayed.
Embodiment A13: The system of any of Embodiments A9 to A12, wherein at least one of the shape of the at least one user-interactable display segment and the position of the at least one user-interactable display segment is variable over the video's playtime.
Embodiment A14: The system of any of Embodiments A1 to A13, wherein the processing unit is configured to operate the display arrangement in response to a user's input to perform at least one of stop displaying the at least two different videos, continue displaying the at least two different videos, adjust a volume of a sound output, adjust a playback speed of the different videos, synchronously forward the at least two different videos, and synchronously rewind the at least two different videos.
Embodiment A15: A method performed by an automotive infotainment video player system, the method comprising: storing, on a video server, a plurality of different videos; receiving, by an input device, a user input for selecting one of the videos stored on the video server to be displayed; and, in response to receiving the user input for selecting one of the videos stored on the video server to be displayed, displaying, using a display arrangement, at least two different videos simultaneously.
Embodiment A16: A computer program product comprising program code portions for performing the method according to Embodiment A15 when the computer program product is executed on one or more computing devices.
Embodiment A17: The computer program product of Embodiment A16, stored on a computer readable recording medium.
Embodiment B1: An automotive infotainment video player system comprising a video server configured to store at least one video, the video being linked to at least one marking mask, which includes at least one user-interactable display segment; a display arrangement configured to display the video linked to the at least one marking mask; an input device configured to receive a user input, which includes a user's interaction with the user-interactable display segment of the marking mask that is linked to the video which is displayed by the display arrangement; and a processing unit configured to operate the display arrangement in response to the user input, which is received by the input device.
Embodiment B2: The system of Embodiment B1, wherein the display arrangement is further configured to display the at least one user-interactable display segment when displaying the video.
Embodiment B3: The system of the Embodiment B1 or B2, wherein the marking mask is generated based on video data of the video.
Embodiment B4: The system of any of Embodiments B1 to B3, wherein the at least one user-interactable display segment is formed corresponding to an object visible in the video when displayed.
Embodiment B5: The system of any of Embodiments B1 to B4, wherein at least one of the shape of the at least one user-interactable display segment and the position of the at least one user-interactable display is variable over the playtime of the video.
Embodiment B6: The system of any of Embodiments B1 to B5, wherein the display arrangement is further configured to simultaneously display the at least one video and an accompanying text information, the accompanying text information being generated based on video data of the least one video.
Embodiment B7: The system of Embodiment B6, wherein the accompanying text information is generated based on text information visible in the video when displayed.
Embodiment B8: The system of Embodiment B7, wherein the accompanying text information represents a translation of text, which visible in the video when displayed, into another language.
Embodiment B9: The system of any of Embodiments B1 to B8, wherein the video server is configured to store a plurality of different videos, and wherein the display arrangement is configured to display at least two of the different videos simultaneously.
Embodiment B10: The system of Embodiment B9, wherein each of the plurality of different videos is linked to at least one marking mask, which includes at least one user-interactable display segment.
Embodiment B11: The system of Embodiment B9 or B10, wherein the processing unit is further configured to operate the display arrangement to receive, in response to a user's input for selecting one of the videos stored on the video server to be displayed, at least two different videos from the video server and display the received videos simultaneously.
Embodiment B12: The system of Embodiment B11, wherein the processing unit is configured to operate the display arrangement to perform at least one of start displaying the at least two different videos simultaneously, start displaying the at least two different videos after receiving of the at least two different videos from the video server has been completed, and start displaying the at least two different videos after a predetermined amount of video data for each of the at least two different videos has been received from the video server.
Embodiment B13: The system of any of Embodiments B1 to B12, wherein the processing unit is further configured to operate the display arrangement, in response to the user input received by the input device, to perform at least one of start displaying the video/s, stop displaying the video/s, continue displaying the video/s, adjust a volume of a sound output, adjust a playback speed of the displayed video/s, forward the displayed video/s, and rewind the displayed video/s.
Embodiment B14: A method performed by an automotive infotainment video player system, the method comprising storing, on a video server, at least one video, the video being linked to at least one marking mask, which includes at least one user-interactable display segment; displaying, using a display arrangement, the video linked to the at least one marking mask; inputting, by an input device, a user input including a user's interaction with the user-interactable display segment of the marking mask, which is linked to the video that is displayed by the display arrangement; and operating, using a processing unit, the display arrangement in response to the user input, which is received by the input device.
Embodiment B15: A computer program product comprising program code portions for performing the method according to Embodiment B14 when the computer program product is executed on one or more computing devices.
Embodiment B16: The computer program product of Embodiment B15, stored on a computer readable recording medium.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An automotive infotainment video player system (100) comprising:
a video server (10) configured to store at least one video, the video being linked to at least one marking mask (M), which includes at least one user-interactable display segment (S);
a display arrangement (20) configured to display the video linked to the at least one marking mask;
an input device (30) configured to receive a user input, which includes a user's interaction with the user-interactable display segment of the marking mask that is linked to the video which is displayed by the display arrangement; and
a processing unit (40) configured to operate the display arrangement in response to the user input, which is received by the input device.

2. The system (100) of Claim 1, wherein the display arrangement (20) is further configured to display the at least one user-interactable display segment (S) when displaying the video.

3. The system (100) of the Claim 1 or 2, wherein the marking mask (M) is generated based on video data of the video.

4. The system (100) of any of Claims 1 to 3, wherein the at least one user-interactable display segment (S) is formed corresponding to an object visible in the video when displayed.

5. The system (100) of any of Claims 1 to 4, wherein at least one of the shape of the at least one user-interactable display segment (S) and the position of the at least one user-interactable display is variable over the playtime of the video.

6. The system (100) of any of Claims 1 to 5, wherein the display arrangement (20) is further configured to simultaneously display the at least one video and an accompanying text information, the accompanying text information being generated based on video data of the least one video.

7. The system (100) of Claim 6, wherein the accompanying text information is generated based on text information visible in the video when displayed,
wherein, optionally, the accompanying text information represents a translation of text, which visible in the video when displayed, into another language.

8. The system (100) of any of Claims 1 to 7, wherein the video server (10) is configured to store a plurality of different videos, and
wherein the display arrangement (20) is configured to display at least two of the different videos simultaneously.

9. The system (100) of Claim 8, wherein each of the plurality of different videos is linked to at least one marking mask (M), which includes at least one user-interactable display segment (S).

10. The system (100) of Claim 8 or 9, wherein the processing unit (40) is further configured to operate the display arrangement to receive, in response to a user's input for selecting one of the videos stored on the video server to be displayed, at least two different videos from the video server (10) and display the received videos simultaneously.

11. The system (100) of Claim 10, wherein the processing unit (40) is configured to operate the display arrangement (20) to perform at least one of
start displaying the at least two different videos simultaneously,
start displaying the at least two different videos after receiving of the at least two different videos from the video server (10) has been completed, and
start displaying the at least two different videos after a predetermined amount of video data for each of the at least two different videos has been received from the video server.

12. The system (100) of any of Claims 1 to 11, wherein the processing unit (40) is further configured to operate the display arrangement (20), in response to the user input received by the input device (30), to perform at least one of
start displaying the video/s,
stop displaying the video/s,
continue displaying the video/s,
adjust a volume of a sound output,
adjust a playback speed of the displayed video/s,
forward the displayed video/s, and
rewind the displayed video/s.

13. A method (S200) performed by an automotive infotainment video player system (100), the method comprising:
storing (S202), on a video server (10), at least one video, the video being linked to at least one marking mask (M), which includes at least one user-interactable display segment (S);
displaying (S204), using a display arrangement (20), the video linked to the at least one marking mask;
inputting (S206), by an input device (30), a user input including a user's interaction with the user-interactable display segment of the marking mask, which is linked to the video that is displayed by the display arrangement; and
operating (S208), using a processing unit (40), the display arrangement in response to the user input, which is received by the input device.

14. A computer program product comprising program code portions for performing the method according to Claim 13 when the computer program product is executed on one or more computing devices.

15. The computer program product of Claim 14, stored on a computer readable recording medium.

## Amended claims

### Amended claims in accordance with Rule 137(2) EPC.

1. An automotive infotainment video player system (100) comprising:
a video server (10) configured to store at least one video, the video being linked to at least one marking mask (M), which includes at least one user-interactable display segment (S);
a display arrangement (20) configured to display the video linked to the at least one marking mask, wherein the at least one user-interactable segment (S) overlays an operable element of an automotive infotainment system documented by the displayed video;
an input device (30) configured to receive a user input, which includes a user's interaction with the user-interactable display segment of the marking mask that is linked to the video which is displayed by the display arrangement; and
a processing unit (40) configured to operate the display arrangement in response to the user input, which is received by the input device.

2. The system (100) of Claim 1, wherein the at least one user-interactable display segment (S) is formed corresponding to an object visible in the video when displayed.

3. The system (100) of Claim 1 or 2, wherein the at least one user-interactable segment (S) overlays a button or an icon of a touchscreen, which are shown in the displayed video.

4. The system (100) of any of Claims 1 to 3, wherein a shape and a position of the at least one user-interactable segment (S) are adjusted to the operable element shown in the displayed video.

5. The system (100) of any one of Claims 1 to 4, wherein the processing unit (40) is configured to operate the display arrangement (20), in response to the user input, to display another video or video section stored on the video server (10).

6. The system (100) of any one of Claims 1 to 5, wherein the at least one user-interactable display segment (S) is linked to a predefined section of a video stored on the video server (10).

7. The system (100) of Claim 6, wherein the at least one user-interactable segment (S) formed and positioned corresponding to a menu item of a touch display shown in the displayed video is linked to a video or video section showing a control menu or sub-menu which corresponds to the control menu or submenu that would be activated in response to a driver's interaction with the shown menu item of the touch display shown in the video.

8. The system (100) of any of Claims 1 to 7, wherein at least one of the shape of the at least one user-interactable display segment (S) and the position of the at least one user-interactable display is variable over the playtime of the video.

9. The system (100) of any of Claims 1 to 8, wherein the display arrangement (20) is further configured to simultaneously display the at least one video and an accompanying text information, the accompanying text information being generated based on video data of the least one video.

10. The system (100) of Claim 9, wherein the accompanying text information is generated based on text information visible in the video when displayed.

11. The system (100) of Claim 10, wherein the accompanying text information represents a translation of text, which is visible in the video when displayed, into another language.

12. The system (100) of any of Claims 1 to 11, wherein the processing unit (40) is further configured to operate the display arrangement (20), in response to the user input received by the input device (30), to perform at least one of
start displaying the video/s,
stop displaying the video/s,
continue displaying the video/s,
adjust a volume of a sound output,
adjust a playback speed of the displayed video/s,
forward the displayed video/s, and
rewind the displayed video/s.

13. A method (S200) performed by an automotive infotainment video player system (100), the method comprising:
storing (S202), on a video server (10), at least one video, the video being linked to at least one marking mask (M), which includes at least one user-interactable display segment (S);
displaying (S204), using a display arrangement (20), the video linked to the at least one marking mask, wherein the at least one user-interactable segment (S) overlays an operable element of an automotive infotainment system documented by the displayed video;
inputting (S206), by an input device (30), a user input including a user's interaction with the user-interactable display segment of the marking mask, which is linked to the video that is displayed by the display arrangement; and
operating (S208), using a processing unit (40), the display arrangement in response to the user input, which is received by the input device.

14. A computer program product comprising program code portions for performing the method according to Claim 13 when the computer program product is executed on one or more computing devices.

15. The computer program product of Claim 14, stored on a computer readable recording medium.
